# EUROPÄISCHE PATENTSCHRIFT

(11) **EP 3 542 006 B1**
(45) Veröffentlichungstag und Bekanntmachung des Hinweises auf die Patenterteilung: **22.12.2021**
(21) Anmeldenummer: 17804810.4
(22) Anmeldetag: 15.11.2017
(51) Int. Cl.: E04B 1/348

(54) **WOHNBLOCK UND VERFAHREN ZUM HERSTELLEN EINER WÄRMEDÄMMUNG**
RESIDENTIAL BLOCK AND METHOD FOR PRODUCING A THERMAL INSULATION
IMMEUBLE À APPARTEMENTS ET PROCÉDÉ DE FABRICATION D'UNE ISOLATION THERMIQUE

(30) Priorität: 15.11.2016 DE 202016106380 U; 26.07.2017 DE 102017116939
(43) Veröffentlichungstag der Anmeldung: 25.09.2019
(73) Patentinhaber: Werk Eins GmbH, 41849 Wassenberg (DE)
(72) Erfinder: MALLINOWSKI, Ivan, 41849 Wassenberg (DE)
(74) Vertreter: Bauer, Dirk
(86) Internationale Anmeldenummer: PCT/EP2017/001334
(87) Internationale Veröffentlichungsnummer: WO 2018/091137

(56) Entgegenhaltungen:
- DE-A1- 3 208 302
- GB-A- 2 472 761
- US-A- 5 733 582

## Beschreibung

Die Erfindung betrifft zunächst einen Wohnblock mit den Merkmalen des Anspruchs 1 und ein Verfahren zum Herstellen einer Wärmedämmung gemäß Anspruch 14.

Die Trittschalldämmung entkoppelt den Boden mechanisch von der Stellfläche der äußeren Hülle und vermindert so die Übertragung von Laufgeräuschen auf benachbarte, insbesondere auf tiefer liegende Wohneinheiten.

Seecontainer (auch "ISO-Container", insbesondere nach ISO 668) sind genormte quaderförmige-Großraumbehälter aus Stahl, die ein einfaches und schnelles Verladen, Befördern, Lagern und Entladen von Gütern ermöglichen.

Das Upcycling von gebrauchten Seecontainern zu Wohneinheiten erfordert - einerseits um eine hohe Wohnqualität zu ermöglichen, andererseits um den Energieverbrauch bei der Wohnnutzung zu minimieren - eine hochwertige Isolierung des Innenraums. Um Wärmebrücken sowohl durch metallische Verbindungen als auch durch Fugen zu vermeiden, kommen monolithische, also aus einem Stück bestehende und fugenlos zusammenhängende Wärmedämmungen zum Einsatz, die den Boden, die Raumdecke und die Raumwände tragen.

DE 20 2008 002 754 U1 schlägt einen Wohnblock aus recycelten ISO-Stahlcontainern mit einer Wärmedämmung aus vorgefertigten Dämmplatten vor. Zwischen den vorgefertigten Dämmplatten sind Wärmebrücken in der Praxis nicht zu vermeiden. Auf der Innenseite der Container sammelt sich - insbesondere wenn diese die Außenhaut des Wohnblocks bildet - Kondenswasser, das Keimbildung und Beeinträchtigungen der Wärmedämmung begünstigt.

GB 2472761 A offenbart die Merkmale des Oberbegriffes des Anspruchs 1 und schlägt vor, in einer Wohneinheit aus einem recycelten ISO-Stahlcontainer die Wärmedämmung aus Polyurethan-Hartschaum innen auf die Wände aufzuspritzen, in die Dämmung Halteelemente einzubetten und an diesen Halteelementen den Boden, die Raumdecke und die Raumwände zu verschrauben. Die in die Wärmedämmung eingebetteten Halteelemente vermindern lokal die Dämmwirkung der Wärmedämmung.

Im Hintergrund der Erfindung schlägt DE 2 221 486 A vor, für einen Wohnwagen-Aufbau zunächst auf einem Kern eine innere Hülle aus glasfaserverstärktem PE-Harz und um diese herum eine Form zu bauen, den Hohlraum mit PU-Schaum als Wärmedämmung auszuschäumen und nach Entfernen der Form eine äußere Hülle wiederum aus GF-verstärktem PE-Harz aufzubauen.

Im weiteren Hintergrund der Erfindung schlagen EP 0 367 275 A1, US 6,920,996 B1 und US 5,733,582 A jeweils zur Herstellung eines Isoliercontainers vor, Seitenwände, Dach und Boden zunächst einzeln als "Sandwich" zu fertigen und dann zusammenzufügen, Abstandhalter zwischen Innen- und Außenhülle anzubringen bzw. den Container und eine vorgefertigte Innenhülle zwischen einem äußeren Stützkorsett und einem Dorn einzuspannen und in verschiedene Richtungen zu kippen, um den noch flüssigen Schaum für die Wärmedämmung in die jeweils gewünschte Richtung fließen zu lassen.

### Aufgabe

Der Erfindung liegt die Aufgabe zugrunde, die Wärmedämmung der Wohneinheit zu verbessern.

### Lösung

Ausgehend von dem bekannten Wohnblock wird nach der Erfindung vorgeschlagen, dass die Wärmedämmung den Zwischenraum vollständig füllt und mit der Raumdecke und den Raumwänden verklebt ist. Die Verklebung ersetzt sowohl die Unterkonstruktion zur Ertüchtigung von Trockenbauwänden (im klassischen Trockenbau durch Holzständerwerk oder Metallprofile) als auch die Befestigung der Raumdecken und der Raumwände an der Unterkonstruktion mittels form- und kraftschlüssiger Verbindungselemente wie Schrauben oder Nägeln. Insbesondere kann die Wärmedämmung in den Zwischenraum eingespritzt werden, wobei die Wärmedämmung mit der Raumdecke und den Raumwänden vollflächig verklebt, oder die Raumdecke und die Raumwände können nachträglich auf die Wärmedämmung geklebt sein. Auch Mischformen sind denkbar.

Vorzugsweise besteht die Wärmedämmung eines erfindungsgemäßen Wohnblocks im Wesentlichen aus einem insbesondere geschlossenporigen Polyurethan-Hartschaum. Die Wärmedämmung trägt dann maßgeblich zur mechanischen Stabilität der Raumdecke und der Raumwände bei.

Alternativ kann die Wärmedämmung im Wesentlichen aus einer Schüttung oder einem rieselfähigen Material - beispielsweise aus Holzfasern, Blähglas, Perlite oder aus einem Kieselsäure-Aerogel - mit einer schäumenden und aushärtenden oder fixierenden Komponente bestehen.

Die Wärmedämmung kann auch schichtweise aus einer Kombination der vorgenannten Materialien aufgebaut sein.

Die Wärmedämmung kann darüber hinaus mindestens eine Schicht aus einer Vakuum-Isolations-Paneele ("VIP-Dämmung") aufweisen. Die Wärmedämmung weist dann einen besonders hohen Dämmwert auf.

Vorzugsweise weisen in einem erfindungsgemäßen Wohnblock die Raumwände und/oder die Raumdecke mindestens eine Schicht aus einem elastischen Material - insbesondere einem offenporigen Elastomerschaum oder einer Mineralwolle in Plattenform - auf. Das elastische Material vermindert die Übertragung von Körperschall zwischen der Hülle und dem Innenraum.

Vorzugsweise weisen in einem erfindungsgemäßen Wohnblock die Raumwände, der Boden und die Raumdecke der Wohneinheit auf einer zum Innenraum gerichteten Innenseite eine mineralisch gebundene Deckschicht auf. Eine mineralisch gebundene Deckschicht, insbesondere aus Gipskarton- oder -faserplatten, erlaubt einen Innenausbau des Innenraums mit seit Generationen bekannten und preisgünstigen Technologien. Alternativ können Boden, Raumwände und Raumdecke auch in einem Holzwerkstoff, beispielsweise aus Dreischicht-Platten ausgeführt sein. Auch Mischformen sind denkbar.

Insbesondere kann in einem erfindungsgemäßen Wohnblock der Boden der Wohneinheit einen Trockenestrich umfassen, Wenn der Trockenestrich ein Flächengewicht von mindestens 50 *kg*/*qm* aufweist, wirkt er zugleich als Wärmepuffer und senkt den Wärmebedarf der Wohneinheit.

In einem erfindungsgemäßen Wohnblock können die Raumwände, der Boden und die Raumdecke der Wohneinheit auf einer zu der Wärmedämmung gerichteten Außenseite eine Dampfsperrschicht aufweisen. Die Dampfsperre vermindert signifikant die Feuchtigkeitsaufnahme der Wärmedämmung - insbesondere eines hygroskopischen Polyurethan-Hartschaums - durch die Raumwände hindurch und bewahrt so die Dämmungseigenschaften der Wärmedämmung.

Vorzugsweise weist in einem erfindungsgemäßen Wohnblock der Boden der Wohneinheit eine Fußbodenheizung auf. Eine Fußbodenheizung vermeidet zusätzliche Heizkörper und sorgt für einen besonders hohen Wohnkomfort. Alternativ können auch die Raumwände oder die Raumdecke als Heizflächen ausgebildet sein. Auch Mischformen sind denkbar.

Vorzugsweise ist in einem erfindungsgemäßen Wohnblock die Hülle der Wohneinheit ein Seecontainer. Insbesondere gebrauchte Seecontainer stehen in großer - und steigender - Zahl preisgünstig als Rohrstoff zur Verfügung, zeichnen sich durch eine sehr robuste, insbesondere äußerst witterungsbeständige Oberfläche aus und können selbst nach langjähriger Zweitnutzung als Wohneinheit wieder dem Stoffkreislauf als hochwertiger Grundstoff zugeführt werden.

Weiter vorzugsweise weist in einem erfindungsgemäßen Wohnblock die Hülle der Wohneinheit eine Länge von etwa 12 m und eine Höhe von etwa 2,90 m auf. Ein solcher "40-Fuß-Container" (sog. "High Cube" oder "HC-Container") ermöglicht eine nutzbare Wohnfläche von bis zu 26 *qm.* Alternativ kommen für kleinere Wohneinheiten auch Seecontainer mit einer Länge von 20', für größere Einheiten auch von 45' oder 53' oder bei weniger aufwändigen Boden- und Deckenkonstruktionen des Wohnraums mit einer Höhe von etwa 2,60 m in Betracht.

Vorzugsweise sind in einem erfindungsgemäßen Wohnblock die äußere Hülle und die Raumwände der Wohneinheit insbesondere durch mindestens eine Türöffnung und/oder Fensteröffnung derart durchbrochen, dass der Innenraum mit einer äußeren Umgebung der Hülle verbunden ist. Alternativ kann einer erfindungsgemäße Wohneinheit auch mittels Treppen oder Aufzug von unten durch die Stellfläche oder von oben durch den Deckel erschlossen werden. Auch Mischformen sind denkbar.

In einem erfindungsgemäßen Wohnblock füllt die Wärmedämmung der Wohneinheit naturgemäß weder die Tür- und Fensteröffnungen noch Öffnungen in der äußeren Hülle für Treppen, Aufzüge und Ver- oder Entsorgungsleitungen. Im Rahmen dieser Anmeldung werden diese Öffnungen nicht als Teil der Außenhülle und die daran nach Innen anschließenden Volumina nicht als Teil des Zwischenraums bezeichnet.

Vorzugsweise weist in einem erfindungsgemäßen Wohnblock die äußere Hülle der Wohneinheit an einer Stirnseite einen parallel zu der Stirnseite verlaufenden Durchgang auf, und der Innenraum ist durch eine Zwischenwand von dem Durchgang getrennt. Die Integration des Durchgangs in die äußere Hülle vereinfacht die Kombination mehrerer solcher Wohneinheiten. Alternativ - oder zusätzlich - kann eine solche Wohneinheit an derselben oder der gegenüberliegenden Stirnseite eine nach Außen offenen Terrasse oder einen Balkon aufweisen.

Vorzugsweise sind in einer Wohnetage eines erfindungsgemäßen Wohnblocks die Innenräume benachbarter Wohneinheiten durch die durchbrochenen Hüllen und Raumwände hindurch verbunden. Durch eine solche Kombination der Wohneinheiten entstehen zusammenhängende Räume, deren Wohnfläche den in einem einzelnen Behälter zur Verfügung stehenden Raum übersteigt.

Vorzugsweise schließen in einer solchen Wohnetage die Durchgänge benachbarter Wohneinheiten aneinander an und bilden einen gemeinsamen Gang.

Weiter vorzugsweise sind in einem erfindungsgemäßen Wohnblock Gänge übereinander angeordneter Wohnetagen durch Treppen und/oder Aufzüge verbunden. Neben- und übereinander angeordnete erfindungsgemäße Wohneinheiten können auch durch einen unabhängigen Anbau erschlossen werden. Auch Mischformen sind denkbar.

Ausgehend von dem bekannten Verfahren wird nach der Erfindung vorgeschlagen, dass zunächst eine in den Innenraum gerichtete Innenfläche der Raumwand mittels eines Kerns und eine zu einer äußeren Umgebung des Behälters gerichtete Außenfläche der Außenwand mittels einer Stützvorrichtung senkrecht zu der Innenfläche gestützt, dann der Schaum eingespritzt und nach Aushärten des Schaums der Kern von der Innenfläche und die Stützvorrichtung von der Außenfläche entfernt wird. Durch das Abstützen der Raumwand und der Außenwand wird deren Verformung wirksam vermieden.

Vorzugsweise wird im Rahmen eines erfindungsgemäßen Verfahrens die Raumwand an dem Kern befestigt, zusammen mit dem Kern vor dem Einspritzen des Schaums parallel zu der Außenwand positioniert und zum Entfernen des Kerns von diesem gelöst. Der Kern übernimmt dann zusätzlich die Funktion eines Handhabungsgeräts für die Raumwand. Das erfindungsgemäße Verfahren erübrigt so eine Befestigung der Raumwand an der Außenwand vor dem Einspritzen des Schaums.

Im Rahmen eines solchen erfindungsgemäßen Verfahrens wird die Raumwand mittels Unterdruck an dem Kern befestigt. Die Befestigung von plattenförmigen Bauelementen mittels Unterdruck an Handhabungsgeräten ist beispielsweise aus der Handhabung von OSB-, Dreischicht- und Spanplatten im Schreinerhandwerk allgemein bekannt. Nach dem Einspritzen und Aushärten des Schaums wird die Raumwand zum Entfernen des Kerns durch Aufheben des Unterdrucks von dem Kern gelöst.

Vorzugsweise wird im Rahmen eines erfindungsgemäßen Verfahrens der Schaum in senkrecht übereinander verlaufenden Lagen eingespritzt. Im erfindungsgemäßen Verfahren füllt dann der Schaum beim Einspritzen unter Wirkung der Schwerkraft Unebenheiten in der Oberfläche der jeweils unteren Lage und gleicht diese aus. Alternativ wird im Rahmen eines erfindungsgemäßen Verfahrens der Schaum aus mehreren horizontal nebeneinander angeordneten Düsen gleichzeitig eingespritzt, die beim Einspritzen ggf. in Längsrichtung der Raumwand pendeln und dabei kontinuierlich angehoben werden.

Vorzugsweise wird im Rahmen eines erfindungsgemäßen Verfahrens der Schaum zugleich zwischen eine zweite Raumwand und eine zweite Außenwand eingespritzt, wobei die Raumwand in dem Innenraum der zweiten Raumwand gegenüber angeordnet und die Außenwand an dem Behälter der zweiten Außenwand gegenüber ausgebildet ist. Der Kern und die Stützvorrichtung stützen sich so beim Einspritzen des Schaums gegeneinander ab. Das erfindungsgemäße Verfahren erübrigt so im Wesentlichen eine äußere Abstützung sowohl des Kerns als auch der Stützvorrichtung.

Vorzugsweise wird im Rahmen eines erfindungsgemäßen Verfahrens der Schaum anschließend an die Herstellung der Wärmedämmung zwischen Raumwand und Außenwand zwischen eine den Raum nach oben schließende Raumdecke und einen den Behälter nach oben schließenden Deckel eingespritzt. Das erfindungsgemäße Verfahren erlaubt so auch die Wärmedämmung der Raumdecke.

Vorzugsweise wird im Rahmen eines erfindungsgemäßen Verfahrens das Einspritzen des Schaums zwischen die Raumwand und die Außenwand mittels einer Kamera dokumentiert. Das erfindungsgemäße Verfahren wird so zur Qualitätskontrolle der Wärmedämmung dokumentiert.

Vorzugsweise kommt ein erfindungsgemäßes Verfahren zur Anwendung beim Herstellen einer Wohneinheit für einen vorstehend beschriebenen erfindungsgemäßen Wohnblock. Das erfindungsgemäße Verfahren erlaubt die industrielle Fertigung einer Wohneinheit mit hoher Maßhaltigkeit, was den handwerklichen Ausbau der Wohneinheit signifikant vereinfacht.

### Ausführungsbeispiele

Die Erfindung wird nachfolgend anhand von Ausführungsbeispielen erläutert. Die in der Zeichnungsfigur gezeigte erste erfindungsgemäße Wohneinheit 1 weist eine äußere Hülle 2 aus einem 40-Fuß-HC-Seecontainer und darin einen quaderförmigen Innenraum 3 sowie zwischen Hülle 2 und Innenraum 3 einen Zwischenraum 4 mit einer Wärmedämmung 5 auf.

Die äußere Hülle 2 weist eine horizontal verlaufende Stellfläche 6, darüber parallel zur Stellfläche 6 einen Deckel 7, zwei seitliche Wände 8 und zwei Stirnwände 9, 10 auf. Die seitlichen Wände 8 sind von zwei Türöffnungen 11 durchbrochen, die vordere Stirnwand 9 ist als Absturzsicherung ausgebildet. Der Innenraum 3 weist einen begehbaren Boden 12, darüber parallel zum Boden 12 eine Raumdecke 13 und vier vertikale Raumwände 14, 15 auf.

Die Raumwände 14, 15, der Boden 12 und die Raumdecke 13 weisen jeweils Gipsfaserplatten als mineralisch gebundene Deckschicht auf, die zu der Wärmedämmung 5 durch eine druckfeste Dampfsperrschicht 16 aus Aluminium begrenzt ist.

Zum Herstellen der Wohneinheit 1 werden die Raumwände 14, 15 und die Raumdecke 13 mittels Unterdruck an einem nicht dargestellten Kern befestigt und mit dem Kern in die zuvor ausgeräumte Hülle 2 eingefahren. Die Hülle 2 wird von Außen in einer gleichfalls nicht dargestellten Stützvorrichtung eingespannt.

Dann wird für die Wärmedämmung 5 ein Polyurethan-Hartschaum mit einem Druck von über 200 bar mittels zweier gleichfalls nicht dargestellter Spritzvorrichtungen zunächst gleichzeitig zwischen beiden Raumwänden 14, 15 und der Hülle 2 in vertikal übereinander verlaufenden Lagen und anschließend zwischen der Raumdecke 13 und der Hülle 2 in nebeneinander verlaufenden Lagen eingespritzt.

Nach dem Aushärten der Wärmedämmung 5 wird der Unterdruck aufgehoben, der Kern dadurch von den Raumwänden 14, 15 und der Raumdecke 13 gelöst. Die Raumwände 14, 15 werden aufeinander zu gefahren, der Kern aus dem Innenraum 3 entnommen und die Einspannung in der Stützvorrichtung gelöst.

Nach Einbau des Bodens 12 mit einer plattenförmig vorgefertigten Wärmedämmung, Trittschalldämmung und Fußbodenheizung 18 ist die Wohneinheit 1 für den Innenausbau bereit.

Der Zwischenraum 4 ist zwischen dem Deckel 7 und der Raumdecke 13 und zwischen den seitlichen Wänden 8 sowie der hinteren Stirnwand 10 und den Raumwänden 14 mit einer monolithischen Wärmedämmung 5 aus Polyurethan-Hartschaum ausgeschäumt und so vollständig und lückenlos gefüllt. Die Wärmedämmung 5 ist sowohl mit der Raumdecke 13 und mit den

Raumwänden 14 als auch mit der Hülle 2 vollflächig verklebt und umschließt darüber hinaus die vordere Raumwand 15 des Innenraums 3, die zugleich eine Trennwand 19 zu einem in die Wohneinheit 1 integrierten Durchgang 20 zwischen den beiden Türöffnungen 11 bildet.

Der Innenraum 3 der erfindungsgemäßen Wohneinheit 1 weist eine nutzbare Wohnfläche von 9,5 *m* × 2,2 *m* = 20,9 *qm* mit einer Raumhöhe 21 von 2,4 m auf. Die erfindungsgemäße Wohneinheit 1 weist hervorragende Schallschutzwerte auf, erfüllt den Passivhaus-Energiestandard und ist zu einem hohen Anteil recyclingfähig. Mehrere Wohneinheiten 1 können so aneinander angesetzt werden, dass die Türöffnungen 11 benachbarter Wohneinheiten 1 sich überdecken und die Durchgänge 20 einen gemeinsamen Laubengang bilden.

Eine zweite, dritte, vierte und fünfte erfindungsgemäß hergestellte Wohneinheit sind nicht dargestellt, entsprechen aber jeweils im Wesentlichen der ersten Wohneinheit 1. Die zweite Wohneinheit weist keinen Durchgang für einen Laubengang, dafür aber eine nutzbare Wohnfläche von 12 *m* x 2,2 *m* = 26,4 *qm* auf. Die dritte Wohneinheit ist für den Einbau in einem Stapel erfindungsgemäß hergestellter Wohneinheiten vorgesehen und weist zwischen Stellfläche und Boden sowie zwischen Deckel und Raumdecke keine Wärmedämmung auf.

Die vierte und fünfte Wohneinheit weisen keine Dampfsperrschicht, aber eine mit der Gipsfaserplatte verbundene elastische Schicht aus Mineralwolle auf, die den Innenraum von der Hülle und damit von der Umgebung oder angrenzenden Wohneinheiten schalltechnisch entkoppelt: In der vierten Wohneinheit grenzt der Polyurethan-Hartschaum unmittelbar an die Mineralwolle, die fünfte Wohneinheit weist eine vorgefertigte doppelte Gipsfaserplatte mit einer Zwischenlage aus der Mineralwolle auf, die die Handhabung vereinfacht.

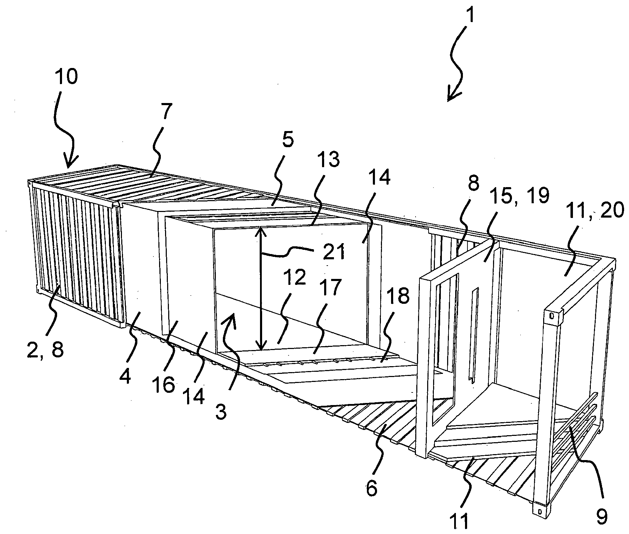

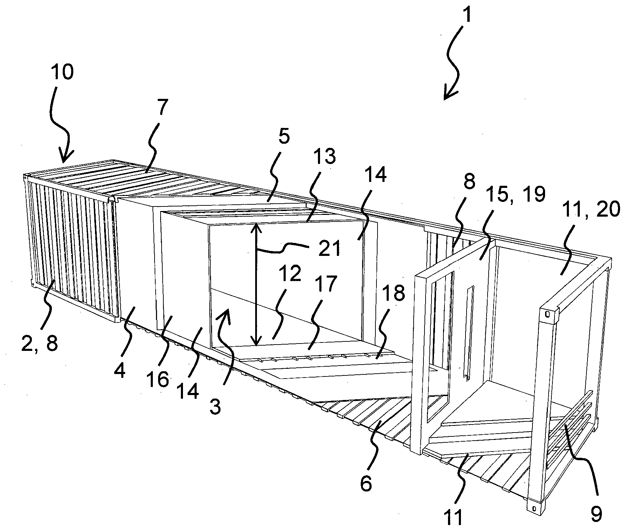

### In der Figur sind

- 1: Wohneinheit
- 2: äußere Hülle
- 3: Innenraum
- 4: Zwischenraum
- 5: Wärmedämmung
- 6: Stellfläche
- 7: Deckel
- 8: Wand
- 9: vordere Stirnwand
- 10: hintere Stirnwand
- 11: Türöffnung
- 12: begehbarer Boden
- 13: Raumdecke
- 14: Raumwand
- 15: vordere Raumwand
- 16: Dampfsperrschicht
- 17: Trittschalldämmung
- 18: Fußbodenheizung
- 19: Trennwand
- 20: Durchgang
- 21: Raumhöhe

## Patentansprüche

1. Wohnblock aus übereinander angeordneten Wohnetagen, wobei mindestens eine der Wohnetagen einander benachbarte Wohneinheiten (1) umfasst mit einer äußeren Hülle (2) aus einem quaderförmigen Behälter, der eine Stellfläche (6), einen Deckel (7), bis zu zwei seitliche Wände (8) und bis zu zwei Stirnwände (9, 10) aufweist, mit einem quaderförmigen Innenraum (3), der eine Kantenlänge von jeweils mindestens 2 m, einen begehbaren Boden (12) mit Trittschalldämmung (17), eine Raumdecke (13) und bis zu vier Raumwände (14, 15) aufweist, wobei die Raumwände (14, 15) Trockenbauwände sind, mit einem zwischen einerseits dem Deckel (7) und den Wänden (8), und andererseits der Raumdecke (13) und den Raumwänden (14) gebildeten Zwischenraum (4), und mit einer monolithischen Wärmedämmung (5) in dem Zwischenraum (4), ***dadurch gekennzeichnet, dass*** die Wärmedämmung (5) den Zwischenraum (4) vollständig füllt und mit der Raumdecke (13) und den Raumwänden (14) derart verklebt ist, dass die Wärmedämmung (5) eine Unterkonstruktion zur Ertüchtigung der Trockenbauwände ersetzt.

2. Wohnblock nach dem vorgenannten Anspruch, ***dadurch gekennzeichnet, dass*** die Wärmedämmung aus einem insbesondere geschlossenporigen Polyurethan-Hartschaum besteht.

3. Wohnblock nach einem der vorgenannten Ansprüche, ***dadurch gekennzeichnet, dass*** die Raumwände (14) und/oder die Raumdecke (13) mindestens eine Schicht aus einem elastischen Material aufweisen.

4. Wohnblock nach einem der vorgenannten Ansprüche, ***dadurch gekennzeichnet, dass*** die Raumwände (14, 15), der Boden (12) und/oder die Raumdecke (13) auf einer zum Innenraum (3) gerichteten Innenseite eine mineralisch gebundene Deckschicht aufweisen und/oder in einem Holzwerkstoff ausgeführt sind.

5. Wohnblock nach dem vorgenannten Anspruch, ***dadurch gekennzeichnet, dass*** der Boden (12) einen Trockenestrich, vorzugsweise mit einem Flächengewicht von mindestens 50 *kg*/*qm* umfasst.

6. Wohnblock nach einem der vorgenannten Ansprüche, ***dadurch gekennzeichnet, dass*** der Boden (12) eine Fußbodenheizung (18) aufweist.

7. Wohnblock nach einem der vorgenannten Ansprüche, ***dadurch gekennzeichnet, dass*** die Hülle ein Seecontainer ist.

8. Wohnblock nach dem vorgenannten Anspruch, ***dadurch gekennzeichnet, dass*** die Hülle (2) eine Länge von 12 m und eine Höhe von 2,90 m aufweist.

9. Wohnblock nach einem der vorgenannten Ansprüche, ***dadurch gekennzeichnet, dass*** die Hülle (2) und die Raumwände (14, 15) derart durchbrochen sind, dass der Innenraum mit einer äußeren Umgebung der Hülle verbunden ist.

10. Wohnblock nach dem vorgenannten Anspruch, ***dadurch gekennzeichnet, dass*** die Innenräume benachbarter Wohneinheiten durch die durchbrochenen Hüllen (2) und Raumwände (14, 15) hindurch verbunden sind.

11. Wohnblock nach einem der vorgenannten Ansprüche, ***dadurch gekennzeichnet, dass*** die äußere Hülle (2) an einer Stirnseite einen parallel zu der Stirnseite verlaufenden Durchgang (20) aufweist, und der Innenraum (3) durch eine Zwischenwand von dem Durchgang (20) getrennt ist.

12. Wohnblock nach dem vorgenannten Anspruch, ***dadurch gekennzeichnet, dass*** die Durchgänge (20) der Wohneinheiten (1) aneinander anschließen und einen Gang bilden.

13. Wohnblock nach dem vorgenannten Anspruch, ***dadurch gekennzeichnet, dass*** die Gänge der Wohnetagen durch Treppen und/oder Aufzüge verbunden sind.

14. Verfahren zum Herstellen einer Wärmedämmung (5) zwischen einer Raumwand (14) eines quaderförmigen Innenraums (3) und einer zu der Raumwand (14) parallelen Außenwand (8), wobei der Innenraum (3) eine Kantenlänge von jeweils mindestens 2 m aufweist und die Außenwand (8) an einem quaderförmigen Behälter ausgebildet ist, der den Innenraum (3) umschließt, und wobei zunächst eine in den Innenraum (3) gerichtete Innenfläche der Raumwand (14) an einem Kern befestigt, zusammen mit dem Kern vor dem Einspritzen des Schaums parallel zu der Außenwand (8) positioniert und eine zu einer äußeren Umgebung des Behälters gerichtete Außenfläche der Außenwand (8) mittels einer Stützvorrichtung senkrecht zu der Innenfläche gestützt, dann ein aushärtender Schaum zwischen die Raumwand (14) und die Außenwand (8) eingespritzt und nach Aushärten des Schaums der Kern von der Innenfläche und die Stützvorrichtung von der Außenfläche entfernt wird, ***dadurch gekennzeichnet, dass*** die Raumwand (14) eine Trockenbauwand ist, die mittels Unterdruck an dem Kern befestigt wird, wobei die Wärmedämmung (5) eine Unterkonstruktion zur Ertüchtigung der Trockenbauwand ersetzt.

15. Verfahren nach dem vorgenannten Anspruch, ***dadurch gekennzeichnet, dass*** der Schaum in vertikal übereinander verlaufenden Lagen eingespritzt wird.

16. Verfahren nach einem der Ansprüche 14 oder 15, ***dadurch gekennzeichnet, dass*** der Schaum zugleich zwischen eine zweite Raumwand (14) und eine zweite Außenwand (8) eingespritzt wird, wobei die Raumwand (14) in dem Innenraum (3) der zweiten Raumwand (14) gegenüber angeordnet und die Außenwand (8) an dem Behälter der zweiten Außenwand (8) gegenüber ausgebildet ist.

17. Verfahren nach einem der Ansprüche 14 bis 16, ***dadurch gekennzeichnet, dass*** der Schaum anschließend zwischen eine den Raum nach oben schließende Raumdecke (13) und einen den Behälter nach oben schließenden Deckel (7) eingespritzt wird.

18. Verfahren nach einem der Ansprüche 14 bis 17, ***dadurch gekennzeichnet, dass*** das Einspritzen des Schaums zwischen die Raumwand (14) und die Außenwand (8) mittels einer Kamera dokumentiert wird.

19. Verfahren zum Herstellen einer Wohneinheit (1) für einen Wohnblock nach einem der Ansprüche 1 bis 13, ***dadurch gekennzeichnet, dass*** die Wärmedämmung (5) gemäß einem der Ansprüche 14 bis 18 hergestellt wird.

## Claims

1. A residential block consisting of residential storeys arranged one above the other, at least one of the residential storeys comprising mutually adjacent residential units (1) having: an outer shell (2) consisting of a cuboid container which has a bottom surface (6), a top (7), up to two lateral walls (8) and up to two end walls (9, 10); a cuboid interior (3) which has an edge length of at least 2 m in each case, a floor (12) which can be walked on with footfall sound insulation (17), a room ceiling (13) and up to four room walls (14, 15), the room walls (14, 15) being plasterboard walls; an intermediate space (4) formed between the top (7) and the walls (8) on one side and the room ceiling (13) and the room walls (14) on the other side; and monolithic thermal insulation (5) in the intermediate space (4),
**characterised in that**
the thermal insulation (5) completely fills the intermediate space (4) and is adhesively bonded to the room ceiling (13) and the room walls (14) such that the thermal insulation (5) replaces a substructure for reinforcing the plasterboard walls.

2. The residential block according to the preceding claim, **characterised in that**
the thermal insulation consists of a polyurethane hard foam, in particular with closed pores.

3. The residential block according to any one of the preceding claims,
**characterised in that**
the room walls (14) and/or the room ceiling (13) have at least one layer of an elastic material.

4. The residential block according to any one of the preceding claims,
**characterised in that**
the room walls (14, 15), the floor (12) and/or the room ceiling (13) have a mineral-bound top layer on an inner side facing the interior (3) and/or are implemented in a wood-based material.

5. The residential block according to the preceding claim, **characterised in that**
the floor (12) comprises a dry screed, preferably with a weight per unit area of at least 50 kg/m².

6. The residential block according to any one of the preceding claims,
**characterised in that**
the floor (12) has a floor heating system (18).

7. The residential block according to any one of the preceding claims,
**characterised in that**
the shell is a sea container.

8. The residential block according to the preceding claim, **characterised in that**
the shell (2) has a length of 12 m and a height of 2.90 m.

9. The residential block according to any one of the preceding claims,
**characterised in that**
the shell (2) and the room walls (14, 15) are perforated such that the interior is connected to an external environment of the shell.

10. The residential block according to the preceding claim, **characterised in that**
the interiors of adjacent residential units are connected through the perforated shells (2) and room walls (14, 15).

11. The residential block according to any one of the preceding claims,
**characterised in that**
the outer shell (2) has, at one end, a passage (20) running parallel to the end, and the interior (3) is separated from the passage (20) by a partition.

12. The residential block according to the preceding claim, **characterised in that**
the passages (20) of the residential units (1) adjoin one another and form a corridor.

13. The residential block according to the preceding claim, **characterised in that**
the corridors of the residential storeys are connected by stairs and/or lifts.

14. A method for producing thermal insulation (5) between a room wall (14) of a cuboid interior (3) and an outer wall (8) parallel to the room wall (14), the interior (3) having an edge length of at least 2 m in each case, and the outer wall (8) being formed on a cuboid container which encloses the interior (3), in which method an inner face, facing the interior (3), of the room wall (14) is first fastened to a core, positioned together with the core parallel to the outer wall (8) before the foam is injected, and an outer face, facing the external environment of the container, of the outer wall (8) is supported perpendicular to the inner face by means of a supporting device, then a curing foam is injected between the room wall (14) and the outer wall (8), and, after the foam has cured, the core is removed from the inner face and the supporting device is removed from the outer face,
**characterised in that**
the room wall (14) is a plasterboard wall which is fastened to the core by negative pressure, wherein the thermal insulation (5) replaces a substructure for reinforcing the plasterboard wall.

15. The method according to the preceding claim, **characterised in that**
the foam is injected in layers running vertically over one another.

16. The method according to one of Claims 14 or 15, **characterised in that**
the foam is injected simultaneously between a second room wall (14) and a second outer wall (8), wherein the room wall (14) is arranged in the interior (3) opposite the second room wall (14), and the outer wall (8) is formed on the container opposite the second outer wall (8) .

17. The method according to any one of Claims 14 to 16, **characterised in that**
the foam is then injected between a room ceiling (13) closing the room at the top and a top (7) closing the container at the top.

18. The method according to any one of Claims 14 to 17, **characterised in that**
the injection of the foam between the room wall (14) and the outer wall (8) is documented by means of a camera.

19. A method for producing a residential unit (1) for a residential block according to any one of Claims 1 to 13,
**characterised in that**
the thermal insulation (5) is produced according to any one of Claims 14 to 18.

## Revendications

1. Bloc d'habitation constitué d'étages d'habitation, dans lequel l'un au moins des étages d'habitation comporte des unités d'habitation (1) adjacentes les unes aux autres avec une enveloppe extérieure (2) constituée d'un conteneur rectangulaire, lequel présente une surface au sol (6), un couvercle (7), jusqu'à deux parois latérales (8) et jusqu'à deux parois frontales (9, 10), avec un espace intérieur rectangulaire (3) présentant une longueur de côté mesurant respectivement au moins 2 mètres, un plancher praticable (12) avec une isolation phonique (17), un plafond (13) et jusqu'à quatre cloisons (14, 15), dans lequel les parois (14, 15) sont des cloisons sèches, avec un espace intermédiaire (4) formé d'une part entre le couvercle (7) et les parois (8), et d'autre part entre le plafond (13) et les cloisons (14), et avec une isolation thermique monolithique (5) dans l'espace intermédiaire (4), **caractérisé en ce que** l'isolation thermique (5) remplit complètement l'espace intermédiaire (4) et est collée de telle façon avec le plafond (13) et les cloisons (14), que l'isolation thermique (5) remplace une sous-structure pour le renforcement des cloisons sèches.

2. Bloc d'habitation selon la revendication précédente, **caractérisé en ce que** l'isolation thermique est constituée d'une mousse dure de polyuréthane, en particulier à pores fermés.

3. Bloc d'habitation selon l'une des revendications précédentes, **caractérisé en ce que** les cloisons (14) et/ou le plafond (13) présentent au moins une couche d'un matériau élastique.

4. Bloc d'habitation selon l'une des revendications précédentes, **caractérisé en ce que** les cloisons (14, 15), le plancher (12) et/ou le plafond (13) présentent une couche de couverture à liant minéral sur un côté intérieur orienté vers l'espace intérieur (3) et/ou sont réalisés en un matériau dérivé du bois.

5. Bloc d'habitation selon la revendication précédente, **caractérisé en ce que** le plancher (12) comporte une chope sèche, de préférence avec un poids surfacique d'au moins 50 kg/m².

6. Bloc d'habitation selon l'une des revendications précédentes, **caractérisé en ce que** le plancher (12) présente un chauffage au sol (18).

7. Bloc d'habitation selon l'une des revendications précédentes, **caractérisé en ce que** l'enveloppe est un conteneur maritime.

8. Bloc d'habitation selon la revendication précédente, **caractérisé en ce que** l'enveloppe (2) présente une longueur de 12 mètres et une hauteur de 2,90 mètres.

9. Bloc d'habitation selon l'une des revendications précédentes, **caractérisé en ce que** l'enveloppe (2) et les cloisons (14, 15) sont ajourées de telle façon que l'espace intérieur est relié à un environnement extérieur de l'enveloppe.

10. Bloc d'habitation selon la revendication précédente, **caractérisé en ce que** les espaces intérieurs d'unités d'habitation voisines sont reliés à travers les enveloppes (2) et les cloisons (14, 15) ajourées.

11. Bloc d'habitation selon l'une des revendications précédentes, **caractérisé en ce que** l'enveloppe extérieure (2) présente un passage (20) sur un côté frontal, lequel s'étend parallèlement au côté frontal, et l'espace intérieur (3) est séparé du passage (20) par une paroi intermédiaire.

12. Bloc d'habitation selon la revendication précédente, **caractérisé en ce que** les passages (20) des unités d'habitation (1) sont accolés et forment un couloir.

13. Bloc d'habitation selon la revendication précédente, **caractérisé en ce que** les couloirs des étages d'habitation sont reliés par des escaliers et/ou des ascenseurs.

14. Procédé de fabrication d'une isolation thermique (5) entre l'une des cloisons (14) d'un espace intérieur rectangulaire (3) et une paroi extérieure (8) parallèle à la cloison (14), dans lequel l'espace intérieur (3) présente une longueur de côté mesurant respectivement au moins 2 mètres et la paroi extérieure (8) est formée sur un conteneur rectangulaire, lequel entoure l'espace intérieur (3), et dans lequel une surface intérieure de la cloison (14) orientée vers l'espace intérieur (3) est tout d'abord fixée à un noyau et positionnée parallèlement à la paroi extérieure (8) ensemble avec le noyau avant l'injection de la mousse, et une surface extérieure de la paroi extérieure (8) orientée vers un environnement extérieur du conteneur est appuyée perpendiculairement à la surface intérieure au moyen d'un dispositif de support, puis une mousse durcissable est injectée entre la cloison (14) et la paroi extérieure (8) et, après le durcissement de la mousse, le noyau est retiré de la surface intérieure et le dispositif de support est retiré de la surface extérieure, **caractérisé en ce que** la cloison (14) est une cloison sèche, laquelle est fixée au noyau au moyen d'une pression négative, dans lequel l'isolation thermique (5) remplace une sous-structure pour le renforcement de la paroi sèche.

15. Procédé selon la revendication précédente, **caractérisé en ce que** la mousse est injectée en couches s'étendant verticalement les unes au-dessus des autres.

16. Procédé selon l'une des revendications 14 ou 15, **caractérisé en ce que** la mousse est injectée à la fois entre une deuxième cloison (14) et une deuxième paroi extérieure (8), dans lequel la cloison (14) est disposée en face de la deuxième cloison (14) dans l'espace intérieur (3) et la paroi extérieure (8) est formée sur le conteneur en face de la deuxième paroi extérieure (8) .

17. Procédé selon l'une des revendications 14 à 16, **caractérisé en ce que** la mousse est ensuite injectée entre un plafond (13) fermant l'espace vers le haut et un couvercle (7) fermant le conteneur vers le haut.

18. Procédé selon l'une des revendications 14 à 17, **caractérisé en ce que** l'injection de la mousse entre la cloison (14) et la paroi extérieure (8) est documentée au moyen d'une caméra.

19. Procédé de fabrication d'une unité d'habitation (1) pour un bloc d'habitation selon l'une des revendications 1 à 13, **caractérisé en ce que** l'isolation thermique (5) est fabriquée selon l'une des revendications 14 à 18.
